(19) **Europäisches Patentamt**
**European Patent Office**
**Office européen des brevets**

(11) **EP 4 194 496 A1**

(12) **EUROPEAN PATENT APPLICATION**
published in accordance with Art. 153(4) EPC

(43) Date of publication:
**14.06.2023 Bulletin 2023/24**

(21) Application number: **21852445.2**

(22) Date of filing: **03.08.2021**

(51) International Patent Classification (IPC):
**C08K 7/14** $^{(2006.01)}$     **C08L 23/10** $^{(2006.01)}$
**C08L 23/26** $^{(2006.01)}$

(52) Cooperative Patent Classification (CPC):
**C08K 7/14; C08L 23/10; C08L 23/26**

(86) International application number:
**PCT/JP2021/028749**

(87) International publication number:
**WO 2022/030480 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2020 JP 2020134181**

(71) Applicant: **SUMITOMO CHEMICAL COMPANY,
LIMITED**
**Tokyo 103-6020 (JP)**

(72) Inventors:
• **KURIMOTO, Sho**
 **Ichihara-shi, Chiba 299-0195 (JP)**
• **ISHIZUKA, Kenta**
 **Ichihara-shi, Chiba 299-0195 (JP)**

(74) Representative: **Global IP Europe
Patentanwaltskanzlei
Pfarrstraße 14
80538 München (DE)**

(54) **POLYPROPYLENE-BASED RESIN COMPOSITION AND MOLDED OBJECT INCLUDING SAME**

(57)     Provided is a polypropylene-based resin composition from which molded objects diminished in protrudent glass fibers and having excellent flame retardancy can be produced.
    The polypropylene-based resin composition comprises a polypropylene-based polymer (A), a flame retardant (B), and glass fibers (C) having an aspect ratio of 20-60. The glass fibers (C) have a length of preferably 200-600 $\mu$m.

EP 4 194 496 A1

**Description**

TECHNICAL FIELD

The present invention relates to a polypropylene-based resin composition and a molded object containing the same.

BACKGROUND ART

Polypropylene-based resins have excellent molding processability and the like, and are used as materials for interior and exterior members and the like for automobiles. Among the members for automobiles, members required to have flame retardancy have been conventionally formed using metal as a material. However, in recent years, replacement for these members with molded objects of resin compositions has been studied for the purpose of weight reduction, and polyolefin-based resin compositions having flame retardancy have attracted attention.

As such a polyolefin-based resin composition having flame retardancy, for example, a polyolefin-based resin composition containing glass fibers and a flame retardant is known (Patent Document 1).

PRIOR ART DOCUMENTS

PATENT DOCUMENTS

Patent Document 1: WO-A-2016/125597

SUMMARY OF THE INVENTION

PROBLEMS TO BE SOLVED BY THE INVENTION

However, in a molded object formed from a polypropylene-based resin composition, glass fibers may have protruded on the surface of the molded object and impaired the appearance of the molded object.

Therefore, there is a demand for a polypropylene-based resin composition from which molded objects having excellent flame retardancy without impairing the appearance can be produced.

An object of the present invention is therefore to provide a polypropylene-based resin composition from which molded objects diminished in protrudent glass fibers from the surface thereof and having excellent flame retardancy can be produced, and a molded object diminished in protrudent glass fibers from the surface thereof and having excellent flame retardancy.

MEANS FOR SOLVING THE PROBLEMS

The present invention provides the following.

[1] The polypropylene-based resin composition containing a polypropylene-based polymer (A), a flame retardant (B), and glass fibers (C) having an aspect ratio of 20 to 60.
[2] The polypropylene-based resin composition according to [1], wherein the glass fibers (C) have a length of 200 to 600 $\mu$m.
[3] The polypropylene-based resin composition according to [1] or [2], further containing an acid-modified polyolefin-based polymer (D).
[4] The polypropylene-based resin composition according to any one of [1] to [3], having a whole amount of 100 wt%, and

having a content of the polypropylene-based polymer (A) of 30 to 70 wt%,
a content of the flame retardant (B) of 5 to 50 wt%, and
a content of the glass fibers (C) of 5 to 40 wt%.

[5] A molded object containing the polypropylene-based resin composition according to any one of [1] to [4].
[6] The molded object according to [5], having external dimensions of 0.5 to 2 m in length, 0.5 to 2 m in width, and 1 to 10 mm in thickness.

The present disclosure includes the following production method.

[8] A method for producing the polypropylene-based resin composition according to any one of [1] to [5], the method including:

a step of kneading a raw material (1) containing the polypropylene-based polymer (A) and the flame retardant (B), together with the glass fibers (C) in a twin-screw kneading extruder including a cylinder and two screws having a total length of L disposed in the cylinder to obtain a polypropylene-based resin composition, wherein the raw material (1) is fed into the cylinder at a distance L1 from the end position on the upstream side of the two screws, and the glass fibers (C) is fed into the cylinder at a distance L2 from the end on the upstream side of the two screws, and L1/L is in a range of 0 or more and less than 0.3, and L2/L is in a range of 0.3 to 0.9.

EFFECT OF THE INVENTION

According to the present invention, it is possible to provide a polypropylene-based resin composition from which molded objects diminished in protrudent glass fibers and having excellent flame retardancy can be produced and a molded object diminished in protrudent glass fibers and having excellent flame retardancy.

BRIEF DESCRIPTION OF THE DRAWINGS

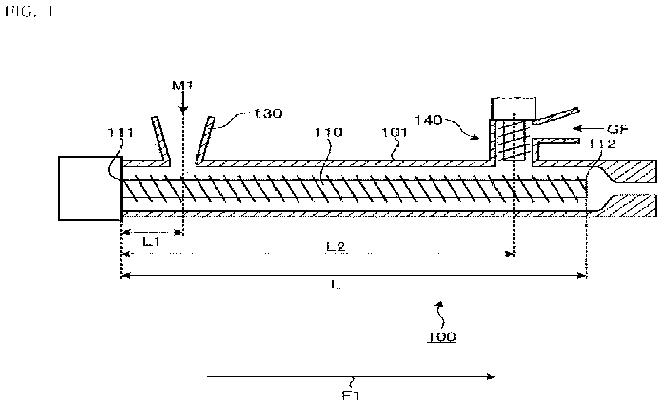

Fig. 1 is a schematic cross-sectional view illustrating an example of a twin-screw kneading extruder for producing a resin composition of the present embodiment.

MODE FOR CARRYING OUT THE INVENTION

Hereinafter, the present invention will be described in detail with embodiments and examples. However, the present invention is not limited to the embodiments and examples below, and can be carried out with any modifications without departing from the scope of the claims of the present invention and equivalents thereof.

As used herein, "AA to BB" means AA or more and BB or less. Here, AA and BB represent numerical values, respectively, and AA < BB. The unit of AA is the same as the unit described immediately after BB unless otherwise noted.

As used herein, the term "monomer unit" means a constitutional unit having a structure obtained by polymerizing the monomer.

As used herein, the term "$\alpha$-olefin" means an olefin having a carbon-carbon double bond at the terminal.

As used herein, a limiting viscosity number (unit: dL/g) is a value measured at a temperature of 135°C using tetralin as a solvent by the following method.

Reduced viscosities are measured for multiple concentrations respectively using an Ubbelohde viscometer, the reduced viscosities are plotted with respect to the concentrations, and a limiting viscosity number is determined by an "extrapolation method" in which the concentration is extrapolated to zero. More specifically, using the method described on page 491 of "Polymer solution, Polymer experiment 11 (Kobunshi yoeki, Kobunshi jikken-gaku 11)" (published by Kyoritsu Shuppan Co., Ltd., 1982), a limiting viscosity number is determined by measuring reduced viscosities at three points of concentration of 0.1 g/dL, 0.2 g/dL, and 0.5 g/dL, respectively, plotting the reduced viscosities with respect to the concentrations, and extrapolating the concentration to 0.

[1. Polypropylene-based resin composition]

A polypropylene-based resin composition according to an embodiment of the present invention contains a polypropylene-based polymer (A), a flame retardant (B), and glass fibers (C) having an aspect ratio of 20 to 60. A molded article of the polyproplene-based resin composition of the present embodiment has excellent flame retardancy and good appearance. Hereinafter, the polypropylene-based resin composition of the present embodiment is also simply referred to as the resin composition.

[1.1. Polypropylene-based polymer (A)]

The polypropylene-based polymer is a polymer containing a propylene unit in an amount of more than 50 wt% with respect to all constitutional units of the polymer. The propylene unit in the polypropylene-based polymer is usually 100 wt% or less.

Examples of the polypropylene-based polymer include a propylene homopolymer, and a copolymer of propylene and another monomer copolymerizable therewith. The copolymer may be a random copolymer or a block copolymer.

The polypropylene-based resin composition may contain a single polypropylene-based polymer, or may contain two or more polypropylene-based polymers in combination in any ratio.

Examples of the single polypropylene-based polymer include a homopolymer of propylene, and a random copolymer of propylene and another monomer copolymerizable therewith (hereinafter, also referred to as a polypropylene-based random copolymer).

Examples of the combination of two or more polypropylene-based polymers include combinations of two or more propylene homopolymers having different weight average molecular weights and the like, and combinations of a polymer (I) and a polymer (II) described below.

The polypropylene-based resin composition may contain a heterophasic propylene polymer material as a polypropylene-based polymer. Here, the heterophasic propylene polymer material means a material containing two or more polypropylene-based polymers, in which the two or more polypropylene-based polymers are incompatible and form phases different from each other.

Examples of the heterophasic propylene polymer material include a combination of the following polymer (I) and polymer (II):

The polymer (I) is a polymer having a propylene unit in an amount of more than 80 wt% and 100 wt% or less with respect to the amount of all constitutional units, and the polymer (II) is a copolymer of a propylene unit and at least one monomer unit selected from the group consisting of an ethylene unit and $\alpha$-olefin units having 4 or more carbon atoms. The polymer (I) may be a propylene homopolymer or a copolymer of propylene and another monomer. Each of the polymer (I) and the polymer (II) may be a single polymer or a combination of two or more polymers.

The polypropylene-based polymer is preferably one or more selected from the group consisting of a propylene homopolymer and a heterophasic propylene polymer material, and more preferably a propylene homopolymer, from the viewpoint of improving the rigidity and impact resistance of a molded object containing the resin composition.

The polypropylene-based polymer preferably has an isotactic pentad fraction (also referred to as a [mmmm] fraction) measured by $^{13}$C-NMR of 0.97 or more, and more preferably 0.98 or more, from the viewpoint of improving the rigidity of a molded object containing the resin composition. As the isotactic pentad fraction of the polypropylene-based polymer is closer to 1, the stereoregularity of the molecular structure of the polypropylene-based polymer is higher, and the crystallinity of the polypropylene-based polymer is higher. When the polypropylene-based polymer is a copolymer, the isotactic pentad fraction can be measured for the chain of propylene units in the copolymer.

The polypropylene-based polymer preferably has a melt flow rate (MFR) of 1 g/10 min or more, and more preferably 10 g/10 min or more; preferably of 500 g/10 min or less; and still more preferably of 10 g/10 min to 300 g/10 min, as measured in accordance with JIS K7210-1:2014 and K7210-2:2014 under conditions of 230°C and a load of 2.16 kgf, from the viewpoint of achieving good molding processability of the resin composition.

The polypropylene-based polymer can be produced by, for example, a polymerization method described below using a polymerization catalyst.

Examples of the polymerization catalyst include a Ziegler type catalyst system; a Ziegler-Natta type catalyst system; a catalyst system including an alkylaluminoxane and a transition metal compound of group 4 of the periodic table having a cyclopentadienyl ring; a catalyst system including a transition metal compound of group 4 of the periodic table having a cyclopentadienyl ring, a compound that reacts with the transition metal compound to form an ionic complex, and an organoaluminum compound; and a catalyst system in which a catalyst component (e.g., a transition metal compound of group 4 of the periodic table having a cyclopentadienyl ring, a compound that forms an ionic complex, and an organoaluminum compound) is supported on the inorganic particles (e.g., silica and clay mineral) and modified. In addition, a prepolymerization catalyst prepared by prepolymerizing a monomer such as ethylene or $\alpha$-olefin in the presence of the above-described catalyst system may be used. Examples of the Ziegler-Natta type catalyst system include a catalyst system including a titanium-containing solid transition metal component and an organometallic component in combination.

Examples of the catalyst system include catalyst systems described in JP-A-61-218606, JP-A-5-194685, JP-A-7-216017, JP-A-9-316147, JP-A-10-212319, and JP-A-2004-182981.

Examples of the polymerization method include a bulk polymerization, solution polymerization, and gas phase polymerization. Here, the bulk polymerization refers to a method in which a polymerization is performed using an olefin that is liquid at a polymerization temperature as a medium. The solution polymerization refers to a method in which a polymerization is performed in an inert hydrocarbon solvent such as propane, butane, isobutane, pentane, hexane, heptane, or octane. The gas phase polymerization refers to a method in which, using a monomer in a gas state as a medium, the monomer in the gas state is polymerized in the medium.

Examples of a polymerization system include a batch system, a continuous system, and a combination thereof. The polymerization system may be a multistage system performed using a plurality of polymerization reaction tanks connected in series.

Various conditions (polymerization temperature, polymerization pressure, monomer concentration, catalyst loading amount, polymerization time, etc.) in a polymerization step can be appropriately determined according to a target polypropylene-based polymer.

In the production of the polypropylene-based polymer, in order to remove a residual solvent contained in the obtained polypropylene-based polymer and an ultra-low molecular weight oligomer and the like by-produced during the production, the obtained polypropylene-based polymer may be held at a temperature at which impurities such as the residual solvent and the oligomer can volatilize and at a temperature that is lower than a temperature at which the polypropylene-based polymer melts. Examples of a method for removing impurities such as the residual solvent and the oligomer include methods described in JP-A-55-75410 and JP-B-2565753.

(Propylene homopolymer)

The propylene homopolymer preferably has a limiting viscosity number [η] of 0.1 to 2 dL/g, more preferably 0.5 to 1.5 dL/g, and still more preferably 0.7 to 1.4 dL/g, from the viewpoint of achieving good fluidity during melting of the resin composition and good toughness of a molded object containing the resin composition. Here, the limiting viscosity number [η] is a numerical value measured in tetralin at 135°C.

In addition, the propylene homopolymer preferably has a molecular weight distribution Mw/Mn of 3 or more and less than 7, and more preferably 3 to 5, from the viewpoint of achieving good fluidity during melting of the resin composition and good toughness of a molded object containing the resin composition. Here, Mw represents a weight average molecular weight, and Mn represents a number average molecular weight. The molecular weight distribution is a numerical value measured by gel permeation chromatography (also referred to as GPC).

(Polypropylene-based random copolymer)

Examples of the polypropylene-based random copolymer include a random copolymer containing a propylene unit and an ethylene unit (hereinafter, also referred to as random copolymer (1)); random copolymer containing a propylene unit and an α-olefin unit having 4 or more carbon atoms (hereinafter, also referred to as a random polymer (2)); and a random copolymer containing a propylene unit, an ethylene unit, and an α-olefin unit having 4 or more carbon atoms (hereinafter, also referred to as a random polymer (3)).

The α-olefin having 4 or more carbon atoms that can constitute the polypropylene-based random copolymer is preferably an α-olefin having 4 to 10 carbon atoms. Examples of the α-olefin having 4 to 10 carbon atoms include 1-butene, 1-pentene, 1-hexene, 4-methyl-1-pentene, 1-octene, and 1-decene; and are preferably 1-butene, 1-hexene, and 1-octene.

Examples of the random copolymer (2) include a propylene-1-butene random copolymer, propylene-1-hexene random copolymer, propylene-1-octene random copolymer, and propylene-1-decene random copolymer.

Examples of the random copolymer (3) include a propylene-ethylene-1-butene copolymer, propylene-ethylene-1-hexene copolymer, propylene-ethylene-1-octene copolymer, and propylene-ethylene-1-decene copolymer.

The content of the ethylene unit in the random copolymer (1) is preferably 0.1 to 40 wt%, more preferably 0.1 to 30 wt%, and still more preferably 2 to 15 wt%.

The content of the α-olefin unit having 4 or more carbon atoms in the random copolymer (2) is preferably 0.1 to 40 wt%, more preferably 0.1 to 30 wt%, and still more preferably 2 to 15 wt%.

The total content of the ethylene unit and the α-olefin unit having 4 or more carbon atoms in the random copolymer (3) is preferably 0.1 to 40 wt%, more preferably 0.1 to 30 wt%, and still more preferably 2 to 15 wt%.

The content of the propylene unit in each of the random copolymers (1) to (3) is preferably 60 to 99.9 wt%, more preferably 70 to 99.9 wt%, and still more preferably 85 to 98 wt%.

(Heterophasic propylene polymer material)

The polymer (I) is, as described above, a polymer having a propylene unit in an amount of more than 80 wt% and 100 wt% or less with respect to the amount of all constitutional units. The total content of the monomer units other than the propylene unit in the polymer (I) is usually 0 wt% or more and less than 20 wt%, and may be 0 wt%, or 0.01 wt% or more, based on 100 wt% of the weight of the polymer (I).

Examples of the monomer unit that may be contained in the polymer (I) and is other than the propylene unit include an ethylene unit and an α-olefin unit having 4 or more carbon atoms.

The α-olefin having 4 or more carbon atoms that can constitute the polymer (I) is preferably an α-olefin having 4 to 10 carbon atoms, more preferably 1-butene, 1-hexene, or 1-octene, and still more preferably 1-butene.

Examples of the polymer (I) include a propylene homopolymer, propylene-ethylene copolymer, propylene-1-butene copolymer, propylene-1-hexene copolymer, propylene-1-octene copolymer, propylene-ethylene-1-butene copolymer, propylene-ethylene-1-hexene copolymer, and propylene-ethylene-1-octene copolymer.

Among them, the polymer (I) is preferably a propylene homopolymer, propylene-ethylene copolymer, propylene-1-butene copolymer, or propylene-ethylene-1-butene copolymer, and is particularly preferably a propylene homopolymer from the viewpoint of the rigidity of a molded object containing the resin composition.

The polymer (II) is, as described above, a copolymer of a propylene unit and at least one monomer unit selected from the group consisting of an ethylene unit and $\alpha$-olefin units having 4 or more carbon atoms.

The total content of the ethylene unit and the $\alpha$-olefin unit having 4 or more carbon atoms in the polymer (II) is preferably 20 to 80 wt% and more preferably 20 to 60 wt% based on 100 wt% of the weight of the polymer (II).

The $\alpha$-olefin having 4 or more carbon atoms that can constitute the polymer (II) is preferably an $\alpha$-olefin having 4 to 10 carbon atoms, and examples thereof include the same as the examples of the $\alpha$-olefin that can constitute the polymer (I).

Examples of the polymer (II) include a propylene-ethylene copolymer, propylene-ethylene-1-butene copolymer, propylene-ethylene-1-hexene copolymer, propylene-ethylene-1-octene copolymer, propylene-ethylene-1-decene copolymer, propylene-1-butene copolymer, propylene-1-hexene copolymer, propylene-1-octene copolymer, and propylene-1-decene copolymer; and are preferably a propylene-ethylene copolymer, propylene-1-butene copolymer, and propylene-ethylene-1-butene copolymer, and more preferably a propylene-ethylene copolymer.

The content of the polymer (II) in the heterophasic propylene polymer material is preferably 1 to 50 wt%, more preferably 1 to 40 wt%, still more preferably 5 to 30 wt%, and particularly preferably 8 to 15 wt%, based on 100 wt% of the total weight of the polymer (I) and the polymer (II) .

Examples of the heterophasic propylene polymer material include the following combinations of polymers, in which the polymer (I) is a propylene homopolymer:

a combination of a propylene homopolymer and (propylene-ethylene) copolymer, a combination of a propylene homopolymer and (propylene-ethylene-1-butene) copolymer, a combination of a propylene homopolymer and (propylene-ethylene-1-hexene) copolymer, a combination of a propylene homopolymer and (propylene-ethylene-1-octene) copolymer, a combination of a propylene homopolymer and (propylene-1-butene) copolymer, a combination of a propylene homopolymer and (propylene-1-hexene) copolymer, a combination of a propylene homopolymer and (propylene-1-octene) copolymer, and a combination of a propylene homopolymer and (propylene-1-decene) copolymer.

Other examples of the heterophasic propylene polymer material include the following combinations of polymers, in which the polymer (I) is a polymer containing a propylene unit and a monomer unit other than the propylene unit (here, the type of the polymer (I) is described first, and the type of the polymer (II) is described next):

a combination of a (propylene-ethylene) copolymer and (propylene-ethylene) copolymer, a combination of a (propylene-ethylene) copolymer and (propylene-ethylene-1-butene) copolymer, a combination of a (propylene-ethylene) copolymer and (propylene-ethylene-1-hexene) copolymer, a combination of a (propylene-ethylene) copolymer and (propylene-ethylene-1-octene) copolymer, a combination of a (propylene-ethylene) copolymer and (propylene-ethylene-1-decene) copolymer, a combination of a (propylene-ethylene) copolymer and (propylene-1-butene) copolymer, a combination of a (propylene-ethylene) copolymer and (propylene-1-hexene) copolymer, a combination of a (propylene-ethylene) copolymer and (propylene-1-octene) copolymer, a combination of a (propylene-ethylene) copolymer and (propylene-1-decene) copolymer, a combination of a (propylene-1-butene) copolymer and (propylene-ethylene) copolymer, a combination of a (propylene-1-butene) copolymer and (propylene-ethylene-1-butene) copolymer, a combination of a (propylene-1-butene) copolymer and (propylene-ethylene-1-hexene) copolymer, a combination of a (propylene-1-butene) copolymer and (propylene-ethylene-1-octene) copolymer, a combination of a (propylene-1-butene) copolymer and (propylene-ethylene-1-decene) copolymer, a combination of a (propylene-1-butene) copolymer and (propylene-1-butene) copolymer, a combination of a (propylene-1-butene) copolymer and (propylene-1-hexene) copolymer, a combination of a (propylene-1-butene) copolymer and (propylene-1-octene) copolymer, a combination of a (propylene-1-butene) copolymer and (propylene-1-decene) copolymer, a combination of a (propylene-1-hexene) copolymer and (propylene-1-hexene) copolymer, a combination of a (propylene-1-hexene) copolymer and (propylene-1-octene) copolymer, a combination of a (propylene-1-hexene) copolymer and (propylene-1-decene) copolymer, a combination of a (propylene-1-octene) copolymer and (propylene-1-octene) copolymer, and a combination of a (propylene-1-octene) copolymer and (propylene-1-decene) copolymer.

The heterophasic propylene polymer material that can be contained in the resin composition is preferably a combination of a propylene homopolymer and (propylene-ethylene) copolymer, a combination of a propylene homopolymer and (propylene-ethylene-1 butene) copolymer, a combination of a (propylene-ethylene) copolymer and (propylene-ethylene) copolymer, a combination of a (propylene-ethylene) copolymer and (propylene-ethylene-1-butene) copolymer, or a combination of a (propylene-1-butene) copolymer and (propylene-1-butene) copolymer, and more preferably a combination of a propylene homopolymer and (propylene-ethylene) copolymer.

The heterophasic propylene polymer material can be produced by a multistage polymerization including a polymerization step of a preceding stage of producing the polymer (I) and a polymerization step of producing the polymer (II) in the presence of the polymer (I) produced in the preceding stage. The polymerization can be performed using the catalyst system exemplified as a catalyst usable for the production of the polypropylene-based polymer.

The limiting viscosity number (hereinafter, written as [$\eta$]I) of the polymer (I) is preferably 0.1 to 2 dL/g, more preferably 0.5 to 1.5 dL/g, and still more preferably 0.7 to 1.3 dL/g. Here, the limiting viscosity number [$\eta$]I is a numerical value measured in tetralin at 135°C.

The limiting viscosity number (hereinafter, written as [η]II) of the polymer (II) is preferably 1 to 10 dL/g, more preferably 2 to 10 dL/g, and still more preferably 5 to 8 dL/g.

In addition, the ratio of [η]II to [η]I ([η]II/[η]I) is preferably 1 to 20, more preferably 2 to 10, and still more preferably 2 to 9.

When the polypropylene-based polymer is a polymer material composed of a polymer (I) and a polymer (II) that are formed by the multistage polymerization, a part of a polymer formed by a polymerization in the preceding stage is removed from a polymerization tank in which the polymerization is performed, the limiting viscosity number of the part of the polymer is determined, the limiting viscosity number of a polymer material finally obtained by the multistage polymerization (hereinafter, written as [η]Total) is determined, and, using these the limiting viscosity number values and the contents of the polymers, the limiting viscosity number of a polymer formed by a polymerization in the subsequent stage is calculated.

When the polymer material composed of the polymer (I) and the polymer (II) is a material produced by a method in which the polymer (I) is obtained in a polymerization step of a preceding stage and the polymer (II) is obtained in a polymerization step of a subsequent stage, the procedure for measuring and calculating the content of each of the polymer (I) and polymer (II) and the limiting viscosity numbers ([η]Total, [η]I, and [η]II) are described below.

The limiting viscosity number [η]II of the polymer (II) is calculated from the following formula from the limiting viscosity number ([η]I) of the polymer (I) obtained in the polymerization step of the preceding stage, the limiting viscosity number ([η]Total) measured by the above method of the final polymer (i.e., a polymerization material composed of the polymer (I) and polymer (II)) after the polymerization step of the subsequent stage, and the content of the polymer (II) contained in the final polymer.

$$[η]II = ([η]Total - [η]I × XI)/XII$$

[η]Total: limiting viscosity number of final polymer (unit: dL/g)
[η]I: limiting viscosity number of polymer (I) (unit: dL/g)
XI: proportion by weight of polymer (I) to final polymer
XII: proportion by weight of polymer (II) to final polymer

Note that XI and XII are determined from the mass balance in the polymerization.

The proportion by weight XII of the polymer (II) to the final polymer may be calculated from the following formula using the crystal melting heat quantity of each of the polymer (I) and the final polymer:

$$XII = 1 - (ΔHf)T/(ΔHf)P$$

(ΔHf)T: melting heat quantity of final polymer (polymer (I) and polymer (II)) (unit: cal/g)
(ΔHf)P: melting heat quantity of polymer (I) (unit: cal/g)

In addition, the molecular weight distribution (Mw/Mn) of the polymer (I) measured by GPC is preferably 3 or more and less than 7, and more preferably 3 to 5.

(Content of polypropylene-based polymer (A))

The content of the polypropylene-based polymer (A) in the polypropylene-based resin composition is preferably 30 wt% or more, more preferably 35 wt% or more, and still more preferably 40 wt% or more; is preferably 70 wt% or less, more preferably 65 wt% or less, and still more preferably 60 wt% or less; and is preferably 30 to 70 wt% or less, based on 100 wt% of the whole amount of the polypropylene-based resin composition.

[1.2. Flame retardant (B)]

The resin composition contains a flame retardant. The resin composition may contain a flame retardant singly, or may contain a combination of two or more thereof in any ratio.

Examples of the flame retardant include a halogen-based flame retardant, guanidine-based flame retardant, phosphorus-containing flame retardant, metal oxide, and polyhydric hydroxy group-containing compound.

Examples of the halogen-based flame retardant include an organic halogenated aromatic compound. Examples of the organic halogenated aromatic compound include a halogenated diphenyl compound, halogenated bisphenol-based compound, halogenated bisphenol bis (alkylether)-based compound, and halogenated phthalimide-based compound.

Examples of the halogenated diphenyl compound include a halogenated diphenyl ether-based compound, halogenated diphenyl ketone-based compound, and halogenated diphenyl alkane-based compound.

Examples of the halogenated bisphenol-based compound include halogenated bisphenyl alkanes, halogenated bisphenyl ethers, halogenated bisphenyl thioethers, and halogenated bisphenyl sulfones.

Examples of the halogenated bisphenol bis(alkylether)-based compound include brominated bisphenol A (brominated aliphatic ether), brominated bisphenol S (brominated aliphatic ether), chlorinated bisphenol A (chlorinated aliphatic ether), and chlorinated bisphenol S (chlorinated aliphatic ether), and further specific examples include etherified tetrabromobisphenol A and etherified tetrabromobisphenol S.

Examples of the guanidine-based flame retardant include a guanidine compound such as guanidine nitride.

The phosphorus-containing flame retardant is a flame retardant containing a phosphorus atom. The resin composition preferably contains the phosphorus-containing flame retardant. The resin composition may contain the phosphorus-containing flame retardant singly or in combination of two or more thereof in any ratio.

Examples of the phosphorus-containing flame retardant include a phosphoric acid salt, polyphosphoric acid salt, and phosphoric acid ester.

Specific examples of the phosphoric acid salt include a melamine orthophosphate salt, a piperazine orthophosphate salt, a melamine pyrophosphate salt, a piperazine pyrophosphate salt, calcium phosphate, and magnesium phosphate. Specific examples of the polyphosphoric acid salt include an ammonium polyphosphate salt, piperazine polyphosphate salt, and melamine polyphosphate salt.

Further, specific examples of the phosphoric acid salt and the polyphosphoric acid salt also include salts of orthophosphoric acid and the following bases, salts of pyrophosphoric acid and the following bases, and salts of polyphosphoric acid and the following bases. Examples of the base that can be contained in the phosphoric acid salt include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N'-diethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-1,3,5-triazine, ammelin, phthalodiguanamine, melamine cyanurate, butylene diguanamine, norbornene diguanamine, methylene diguanamine, ethylene dimelamine, trimethylene dimelamine, tetramethylene dimelamine, hexamethylene dimelamine, and 1,3-hexylene dimelamine

The phosphorus-containing flame retardant is preferably one or more selected from the group consisting of a melamine pyrophosphate salt, piperazine pyrophosphate salt, and ammonium polyphosphate salt. The resin composition more preferably contains both a piperazine pyrophosphate salt and melamine pyrophosphate salt as the phosphorus-containing flame retardant, still more preferably contains both a piperazine pyrophosphate salt and melamine pyrophosphate salt, and the ratio by weight of the content of the melamine pyrophosphate salt to the content of the piperazine pyrophosphate salt (melamine pyrophosphate salt/piperazine pyrophosphate salt) in the resin composition is preferably 0.25 or more and 1.0 or less.

The mole ratio of pyrophosphoric acid to melamine in the melamine pyrophosphate salt is preferably 1 : 2. The mole ratio of pyrophosphoric acid to piperazine in the piperazine pyrophosphate salt is preferably 1 : 1.

The melamine phosphate salt or the melamine polyphosphate salt can be obtained by reacting melamine and corresponding phosphoric acid or a polyphosphoric acid or a salt thereof.

As the melamine pyrophosphate salt and the melamine polyphosphate salt, a melamine pyrophosphate salt and a melamine polyphosphate salt obtained by a method of heat-condensing monomelamine orthophosphate may be used, and the melamine pyrophosphate salt and the melamine polyphosphate salt obtained by this method are preferable.

The piperazine phosphate salt or piperazine polyphosphate salt can be obtained by reacting piperazine and corresponding phosphoric acid or a polyphosphoric acid or a salt thereof.

As the piperazine pyrophosphate salt and the piperazine polyphosphate salt, a piperazine pyrophosphate salt and a piperazine polyphosphate salt obtained by a method of heat-condensing monomelamine diorthophosphate may be used, and the piperazine pyrophosphate salt and the piperazine polyphosphate salt obtained by this method are preferable.

As the phosphoric acid salt, a commercially available product can be used. Examples of the commercially available product include "ADK STAB FP-2100J", "ADK STAB FP-2200S", and "ADK STAB FP-2500S" manufactured by ADEKA Corporation, "FCP-796" manufactured by Suzuhiro Chemical Co.,Ltd., and "EXOLIT AP422" and "EXOLIT AP462" manufactured by Clariant Japan K.K.

Examples of the phosphoric acid ester include an aromatic phosphate ester, aliphatic phosphate ester, and oligomer or polymer obtained from the aromatic phosphate ester and the aliphatic phosphate ester.

Specific examples of the aromatic phosphate ester include trixylenyl phosphate, tris(phenylphenyl) phosphate, trinaphthyl phosphate, cresyl diphenyl phosphate, xylenyl diphenyl phosphate, phosphoric acid diphenyl-2-(methacryloyloxy)ethyl, resorcinol bis(diphenyl phosphate), resorcinol bis(dixylenyl phosphate), resorcinol bis(dicresyl phosphate), hydroquinone bis(dixylenyl phosphate), bisphenol A bis(diphenyl phosphate), and tetrakis(2,6-dimethylphenyl)1,3-phenylene bisphosphate.

The aliphatic phosphate esters include trimethyl phosphate, tributyl phosphate, tri(2-ethylhexyl) phosphate, tributoxyethyl phosphate, monoisodecyl phosphate, and 2-acryloyloxyethyl acid phosphate.

As the phosphoric acid ester, a commercially available product can be used. Examples of the commercially available product include "ADK STAB FP-600" and "ADK STAB FP-800" manufactured by ADEKA Corporation.

Examples of the metal oxide include zinc oxide, magnesium oxide, calcium oxide, silicon dioxide, titanium oxide, manganese oxide (MnO and $MnO_2$), iron oxide (FeO, $Fe_2O_3$, and $Fe_3O_4$), copper oxide, nickel oxide, tin oxide, aluminum oxide, and calcium aluminate. The metal oxide is preferably zinc oxide, magnesium oxide, or calcium oxide, and more preferably zinc oxide.

The metal oxide may have been surface-treated. The commercially available zinc oxides include type II zinc oxide manufactured by Seido Chemical Industry Co., Ltd., zinc oxide type 1 manufactured by Mitsui Mining & Smelting Co., Ltd., partially coated zinc oxide manufactured by Mitsui Mining & Smelting Co., Ltd., Nanofine 50 (ultrafine zinc oxide having an average particle diameter of 0.02 um, manufactured by Sakai Chemical Industry Co., Ltd.), and Nanofine K (zinc silicate coated-ultrafine zinc oxide having an average particle diameter of 0.02 um, manufactured by Sakai Chemical Industry Co., Ltd.).

The polyhydric hydroxy group-containing compound is a compound having two or more hydroxy groups. Examples of the polyhydric hydroxy group-containing compound include pentaerythritol, dipentaerythritol, tripentaerythritol, polypentaerythritol having a degree of condensation of 4 or more, trishydroxyethyl isocyanate, polyethylene glycol, glycerin, starch, glucose, cellulose, and sorbitol. The polyhydric hydroxy group-containing compound is preferably a polyhydric alcohol compound due to its low water solubility and low hygroscopicity, more preferably pentaerythritol, dipentaerythritol, tripentaerythritol, or polypentaerythritol, and still more preferably pentaerythritol.

(Content of flame retardant (B))

The content of the flame retardant (B) in the polypropylene-based resin composition is preferably 5 wt% or more, more preferably 10 wt% or more, and still more preferably 15 wt% or more; is preferably 50 wt% or less, more preferably 45 wt% or less, and still more preferably 40 wt% or less; and is preferably 5 to 50 wt% or less, based on 100 wt% of the whole amount of the polypropylene-based resin composition.

When the resin composition contains the phosphorus-containing flame retardant, the content of a flame retardant other than the phosphorus-containing flame retardant, which can be contained in the resin composition, is preferably 0 to 30 wt%, more preferably 0 to 20 wt%, still more preferably 0 to 10 wt%, and may be 0 wt%, based on 100 wt% of the resin composition.

[1.3. Glass fibers (C)]

The glass fibers (C) contained in the resin composition usually has an aspect ratio of 20 to 60. The aspect ratio is preferably 25 or more, and more preferably 30 or more; and is preferably 58 or less, and more preferably 55 or less.

The aspect ratio of the glass fibers contained in the resin composition can be measured by the following method.

The resin composition (2 g) is dissolved in boiling p-xylene for 2 hours to obtain a xylene insoluble component containing glass fibers. Then, the glass fibers in the xylene insoluble component are observed using a microscope, and the length and diameter of 200 glass fibers are measured. The weight average fiber length and average fiber diameter of the 200 glass fibers are calculated, and the ratio of the weight average fiber length to the average fiber diameter is taken as the aspect ratio of the glass fibers contained in the resin composition.

Examples of a method for adjusting the glass fibers contained in the resin composition to the above-described aspect ratio range include a method of appropriately adjusting, when kneading a raw material in an extruder, a position at which the glass fibers are fed into the extruder, the extruder temperature, the screw rotation speed, the melt flow rate of the polypropylene-based polymer as the raw material, length (fiber length) and fiber diameter of the glass fibers as the raw material.

Specific examples of the adjustment method include a method described below.

Fig. 1 is a schematic cross-sectional view illustrating an example of a twin-screw kneading extruder for producing the resin composition of the present embodiment.

The twin-screw kneading extruder 100 includes a cylinder 101 and a screw 110 disposed inside the cylinder 101. A length of the screw 110 from the end 111 on the upstream side to the end 112 on the downstream side in the direction F1 of the flow of a resin to be kneaded (i.e., the entire length of the screw 110) is L.

The twin-screw kneading extruder 100 includes a main hopper 130 and a side feeder 140 that feed raw materials into the cylinder 101. The main hopper 130 is attached to the cylinder 101 so that the raw material M1 can be fed into the cylinder 101 at the position at a distance L1 from the end 111 on the upstream side of the screw 110. The side feeder 140 is attached to the cylinder 101 so that the glass fibers GF can be fed into the cylinder 101 at the position at a distance L2 from the end 111 on the upstream side of the screw 110.

Preferably, the feed position for the glass fibers is adjusted so that L2/L is in a range of 0.3 to 0.9.

Here, components of the resin composition excluding the glass fibers are usually fed into the cylinder 101 at the position at a distance L1 from the position of the end 111 on the upstream side of the screw 110. L1 is preferably 0 or more and less than 0.3.

L2/L is more preferably 0.5 or more, and still more preferably 0.6 or more; and is more preferably 0.5 to 0.9, and still more preferably 0.6 to 0.9. Usually, decreasing L2/L can decrease the aspect ratio of the glass fibers contained in the resin composition, and increasing L2/L can increase the aspect ratio.

Usually, increasing the extruder temperature during producing the resin composition can increase the aspect ratio and the fiber length. The temperature of the extruder is preferably 180°C or higher, more preferably 190°C or higher, and still more preferably 200°C or higher; and is preferably 250°C or lower.

Usually, increasing the melt flow rate of the polypropylene-based polymer as a raw material can increase the aspect ratio and the fiber length.

The length (fiber length) of the glass fibers contained in the resin composition is preferably 200 um or more, and more preferably 300 um or more; is preferably 600 um or less, and more preferably 550 um or less; and is preferably 200 to 600 um, as a weight average fiber length based on 200 fibers. The length and diameter of the glass fibers can be measured by observation with a microscope.

The glass fibers contained in the resin composition may be a combination of two or more types of glass fibers in any ratio. Thus, single type of glass fibers may be used, or a combination of two or more types thereof in any ratio may be used as the glass fibers to be a raw material of the resin composition.

(Content of glass fibers (C))

The content of the glass fibers (C) in the polypropylene-based resin composition is preferably 5 wt% or more, more preferably 8 wt% or more, and still more preferably 10 wt% or more; is preferably 40 wt% or less, more preferably 38 wt% or less, and still more preferably 35 wt% or less; and is preferably 5 to 40 wt% or less, based on 100 wt% of the whole amount of the polypropylene-based resin composition.

The material of the glass fibers is not particularly limited, and any glass can be used. Examples of the material of the glass fibers include E glass (alkali-free glass), A glass, C glass, S glass, and D glass, and among them, E glass is preferable. As the glass fibers, those produced by any production method can be used.

The glass fibers may be those treated with a sizing agent and/or a surface treatment agent.

The glass fibers are preferably those surface-treated with a surface treatment agent from the viewpoint of improving the dispersibility in the polypropylene-based polymer (A). Examples of the surface treatment agent include an organosilane coupling agent, titanate coupling agent, aluminate coupling agent, zirconate coupling agent, silicone compound, higher fatty acid, fatty acid metal salt, and fatty acid ester.

Examples of the organosilane coupling agent include vinyltrimethoxysilane, γ-chloropropyltrimethoxysilane, γ-methacryloxypropyltrimethoxysilane, γ-aminopropyltrimethoxysilane, and 3-acryloxypropyltrimethoxysilane.

Examples of the titanate coupling agent include isopropyl triisostearoyl titanate, isopropyl tris(dioctylpyrophosphate) titanate, and isopropyl tri(N-aminoethyl) titanate.

Examples of the aluminate coupling agent include acetoalkoxyaluminum diisopropylate.

Examples of the zirconate coupling agent include tetra(2,2-diallyloxymethyl)butyl, di(tridecyl) phosphite zirconate, and neopentyl (diallyl) oxytrineodecanoylzirconate.

The silicone compounds include silicone oil and silicone resin.

Examples of the higher fatty acid include oleic acid, capric acid, lauric acid, palmitic acid, stearic acid, montanic acid, linoleic acid, rosin acid, linolenic acid, undecanoic acid, and undecenoic acid.

Examples of the higher fatty acid metal salt include a sodium salt, lithium salt, calcium salt, magnesium salt, zinc salt, and aluminum salt of a fatty acid having 9 or more carbon atoms (e.g., stearic acid or montanic acid). Among them, calcium stearate, aluminum stearate, calcium montanate, and sodium montanate are preferable.

Examples of the fatty acid ester include a polyhydric alcohol fatty acid ester such as glycerin fatty acid ester, an alpha sulfo fatty acid ester, a polyoxyethylene sorbitan fatty acid ester, a sorbitan fatty acid ester, a polyethylene fatty acid ester, and a sucrose fatty acid ester.

The amount of the surface treatment agent used is not particularly limited, and is preferably 0.01 parts by weight to 5 parts by weight, and more preferably 0.1 parts by weight to 3 parts by weight, with respect to 100 parts by weight of the glass fibers.

The glass fibers may have been treated with a sizing agent. The treatment with the sizing agent can bind the glass fibers. Examples of the sizing agent include an epoxy-based sizing agent, aromatic urethane-based sizing agent, aliphatic urethane-based sizing agent, acrylic sizing agent, and maleic anhydride-modified polyolefin-based sizing agent.

The sizing agent is preferably one that melts at a temperature for melt-kneading with the polypropylene-based polymer (A), and more preferably one that melts at 200°C or lower.

Glass fibers that are so-called chopped strands obtained by cutting glass strands may be used as the glass fibers. It is preferable to use glass fibers that are chopped strands from the viewpoint of further enhancing the effect of improving the rigidity and the effect of improving the impact strength of a molded article containing the polypropylene-based resin composition.

As the glass fibers, a resin pellet containing glass fibers (glass fiber-containing resin pellet) may be used. In such a glass fiber-containing pellet, the length (fiber length) of the glass fibers generally coincides with the length in the extrusion direction of the resin pellet.

The glass fiber-containing resin pellet can be produced by any method.

For example, the glass fiber-containing resin pellet can be produced by a pultrusion method. The pultrusion method is usually a method in which a plurality of continuous glass fibers are pulled out while a resin is melt-extruded from a resin extruder to be impregnated into a bundle of the glass fibers, and then the bundle of the plurality of glass fibers are integrated. The bundle of the glass fibers impregnated with the resin is usually cooled and cut with a pelletizer to obtain glass fiber-containing resin pellets.

The content of the glass fibers in the glass fiber-containing resin pellet is preferably 50 to 99.9 wt%.

As the glass fibers, a commercially available product can be used.

[1.4. Acid-modified polyolefin-based polymer (D)]

The polypropylene-based resin composition of the present embodiment may contain an acid-modified polyolefin-based polymer (D) in addition to the polypropylene-based polymer (A), the flame retardant (B), and the glass fibers (C) .

Here, the acid-modified polyolefin-based polymer means a polymer obtained by modifying a polyolefin-based polymer with an unsaturated carboxylic acid and/or an unsaturated carboxylic acid derivative.

Examples of the acid-modified polyolefin-based polymer include an acid-modified polyethylene-based polymer and an acid-modified polypropylene-based polymer.

The acid-modified polyethylene-based polymer means a polymer obtained by modifying a polyethylene-based polymer with an unsaturated carboxylic acid and/or an unsaturated carboxylic acid derivative.

The acid-modified polypropylene-based polymer means a polymer obtained by modifying a polypropylene-based polymer with an unsaturated carboxylic acid and/or an unsaturated carboxylic acid derivative.

The polyolefin-based polymer to be modified is a homopolymer of one type of olefin or a copolymer of two or more types of olefins. Examples of the polyolefin-based polymer to be modified include a polyethylene-based polymer and a polypropylene-based polymer.

The polyethylene-based polymer to be modified is a polymer containing an ethylene unit in an amount of more than 50 wt% with respect to all constitutional units of the polymer. The ethylene unit in the polyethylene-based polymer is usually 100 wt% or less.

The polypropylene-based polymer to be modified is a polymer containing a propylene unit in an amount of more than 50 wt% with respect to all constitutional units of the polymer. The propylene unit in the polypropylene-based polymer is usually 100 wt% or less. Examples of the polypropylene-based polymer to be acid-modified include examples and preferable examples described as the polypropylene-based polymer (A).

The acid-modified polypropylene-based polymer is usually a polymer having a partial structure of a polypropylene-based polymer and a partial structure derived from an unsaturated carboxylic acid and/or an unsaturated carboxylic acid derivative. Examples of the acid-modified polypropylene-based polymer include (a) a polymer obtained by graft-polymerizing an unsaturated carboxylic acid and/or an unsaturated carboxylic acid derivative on a propylene homopolymer, (b) a polymer obtained by graft-polymerizing an unsaturated carboxylic acid and/or an unsaturated carboxylic acid derivative on a copolymer obtained by copolymerizing propylene and one or more monomers selected from the group consisting of ethylene and $\alpha$-olefins having 4 or more carbon atoms, and (c) a modified polypropylene-based polymer obtained by graft-polymerizing an unsaturated carboxylic acid and/or an unsaturated carboxylic acid derivative on a block copolymer obtained by homopolymerizing propylene and then copolymerizing one or more monomers selected from the group consisting of ethylene and $\alpha$-olefins having 4 or more carbon atoms.

The acid-modified polypropylene-based polymer to be subjected to acid modification may be a single polymer or a combination of two or more polymers in any ratio. Thus, the acid-modified polypropylene-based polymer to be subjected to acid modification can be the above-described heterophasic propylene polymer material.

Examples of the unsaturated carboxylic acid include maleic acid, fumaric acid, itaconic acid, acrylic acid, and methacrylic acid.

Examples of the unsaturated carboxylic acid derivative include an acid anhydride, ester compound, amide compound, imide compound, and metal salt of an unsaturated carboxylic acid. Specific examples of the unsaturated carboxylic acid derivative include maleic anhydride, itaconic anhydride, methyl acrylate, ethyl acrylate, butyl acrylate, methyl methacrylate, ethyl methacrylate, butyl methacrylate, 2-hydroxyethyl methacrylate, maleic acid monoethyl ester, maleic acid diethyl ester, fumaric acid monomethyl ester, fumaric acid dimethyl ester, acrylamide, methacrylamide, maleic acid monoamide, maleic acid diamide, fumaric acid monoamide, maleimide, N-butyl maleimide, and sodium methacrylate.

The unsaturated carboxylic acid is preferably maleic acid and acrylic acid, and the unsaturated carboxylic acid derivative is preferably maleic anhydride and 2-hydroxyethyl methacrylate.

The acid-modified polypropylene-based polymer is preferably a polymer of above-described (b) or (c). In one embodiment, the acid-modified polypropylene-based polymer is preferably a modified polyolefin-based polymer obtained by graft-polymerizing maleic anhydride on a polyolefin-based polymer containing propylene units in an amount of more than 50 wt% in all constitutional units.

The total content of the unsaturated carboxylic acid unit and the unsaturated carboxylic acid derivative unit in the acid-modified polyolefin-based polymer is preferably 0.1 wt% to 20 wt%, and more preferably 0.1 wt% to 10 wt%, based on 100 wt% of the amount of the acid-modified polyolefin-based polymer from the viewpoint of the rigidity and hardness of a molded object obtained from the resin composition. Here, when the acid-modified polyolefin-based polymer contains only one of the unsaturated carboxylic acid unit or unsaturated carboxylic acid derivative unit, the total content means the content of the one of the unit.

The content of the unsaturated carboxylic acid unit and the unsaturated carboxylic acid derivative unit employs a value calculated by quantifying the absorption based on the unsaturated carboxylic acid and the unsaturated carboxylic acid derivative by infrared absorption spectrum or NMR spectrum.

The graft efficiency of the unsaturated carboxylic acid and/or the unsaturated carboxylic acid derivative of the acid-modified polyolefin-based polymer is preferably 0.51 or more from the viewpoint of the rigidity and impact strength of a molded object obtained from the resin composition.

The "graft efficiency of the acid-modified polyolefin-based polymer " means "the ratio of the amount of the unsaturated carboxylic acid and/or the unsaturated carboxylic acid derivative chemically bonded to the polymer to the total amount of the unsaturated carboxylic acid and/or the unsaturated carboxylic acid derivative chemically bonded to the polymer and the unsaturated carboxylic acid and/or the unsaturated carboxylic acid derivative not chemically bonded to the polymer, contained in the acid-modified polyolefin-based polymer". The graft efficiency in a graft polymerization of the unsaturated carboxylic acid and/or the unsaturated carboxylic acid derivative can be determined by the following procedures (1) to (9).

(1) An acid-modified polyolefin-based polymer (1.0 g) is dissolved in 100 ml of xylene.

(2) The xylene solution is added dropwise to 1000 ml of methanol under stirring to reprecipitate the acid-modified polyolefin-based polymer.

(3) The reprecipitated acid-modified polyolefin-based polymer is collected.

(4) The collected acid-modified polyolefin-based polymer is vacuum-dried at 80°C for 8 hours to obtain a purified acid-modified polyolefin-based polymer.

(5) The purified acid-modified polyolefin-based polymer is hot-pressed to prepare a film having a thickness of 100 um.

(6) The infrared absorption spectrum of the film is measured.

(7) The absorption based on the unsaturated carboxylic acid and/or the unsaturated carboxylic acid derivative is quantified from the infrared absorption spectrum, and the content (X1) of the unsaturated carboxylic acid and/or the unsaturated carboxylic acid derivative reacted with the polyolefin-based polymer in the acid-modified polyolefin-based polymer is calculated.

(8) Separately, the acid-modified polyolefin-based polymer without purification treatment is subjected to the above procedures (5) to (6), and the content (X2) of the unsaturated carboxylic acid and/or the unsaturated carboxylic acid derivative in the acid-modified polyolefin-based polymer without purification treatment is calculated from its infrared absorption spectrum (X2 is the total of the content (X1) of the unsaturated carboxylic acid and/or unsaturated carboxylic acid derivative that has reacted with the polypropylene-based polymer and the content of the unsaturated carboxylic acid and/or unsaturated carboxylic acid derivative that has not reacted with the polyolefin polymer (i.e., free unsaturated carboxylic acid and/or unsaturated carboxylic acid derivative)).

(9) The graft efficiency is calculated from the equation: graft efficiency = X1/X2.

The MFR of the acid-modified polypropylene-based polymer is preferably 5 to 400 g/10 min, more preferably 10 to 200 g/10 min, and particularly preferably 20 to 200 g/10 min, from the viewpoint of mechanical strength and production stability. Note that the MFR is a value measured under a load of 2.16 kgf at 230°C in accordance with JIS K7210-1:2014 and K7210-2:2014.

[1.5. Optional components]

The polypropylene-based resin composition of the present embodiment may further contain an optional component in addition to the components (A) to (C) and the optionally contained component (D).

Examples of the optional component include an elastomer, neutralizer, antioxidant, ultraviolet absorber, lubricant, antistatic agent, antiblocking agent, processing aid, organic peroxide, colorant (inorganic pigment, organic pigment, etc.), pigment dispersant, foaming agent, foaming nucleating agent, plasticizer, crosslinker, crosslinking aid, brightening agent, antibacterial agent, and light diffusing agent. The resin composition may contain these optional components singly or in combination of two or more thereof.

Examples of the elastomer that can be contained in the resin composition include a random copolymer having an ethylene unit and an $\alpha$-olefin unit having 4 to 10 carbon atoms. The random copolymer preferably has an MFR of 0.1 to 50 g/10 min, as measured under a load of 2.16 kgf at 230°C in accordance with JIS K7210-1:2014 and K7210-2:2014.

The $\alpha$-olefins having 4 to 10 carbon atoms constituting the random copolymer that is an elastomer include the same $\alpha$-olefins as the $\alpha$-olefins having 4 to 10 carbon atoms that can constitute the polypropylene-based polymer (A). Specific examples thereof include an $\alpha$-olefin having a chain structure, such as 1-butene, 1-pentene, 1-hexene, 4-methyl-1-pentene, 1-octene, or 1-decene, and an $\alpha$-olefin having a cyclic structure, such as vinylcyclopropane or vinylcyclobutane; and are preferably 1-butene, 1-hexene, and 1-octene.

Examples of the random copolymer that is an elastomer include an ethylene-1-butene random copolymer, ethylene-1-hexene random copolymer, ethylene-1-octene random copolymer, ethylene-1-decene random copolymer, ethylene-(3-methyl-1-butene) random copolymer, and copolymer of ethylene and an $\alpha$-olefin having a cyclic structure.

The content of the $\alpha$-olefin in the random copolymer is preferably 1 to 49 wt%, more preferably 5 to 49 wt%, and still more preferably 24 to 49 wt%, based on 100 wt% of the weight of the random copolymer.

The density of the random copolymer is preferably 0.850 to 0.890 g/cm$^3$, more preferably 0.850 to 0.880 g/cm$^3$, and still more preferably 0.855 to 0.867 g/cm$^3$, from the viewpoint of improving the impact resistance of a molded object containing the resin composition.

The random copolymer that is an elastomer can be produced by polymerizing a monomer using a polymerization catalyst. Examples of the polymerization catalyst include the catalysts exemplified as the polymerization catalyst for producing the polypropylene-based polymer.

As the random copolymer, a commercially available product may be used. Examples of the commercially available product as the random copolymer that is an elastomer include ENGAGE (registered trademark) manufactured by Dow Chemical Japan Co., Ltd.; TAFMER (registered trademark) manufactured by Mitsui Chemicals, Inc.; NEO-ZEX (registered trademark) and ULTZEX (registered trademark) manufactured by Prime Polymer Co., Ltd.; and EXCELLEN FX (registered trademark), SUMIKATHENE (registered trademark), and ESPRENE SPO (registered trademark) manufactured by Sumitomo Chemical Co., Ltd.

The content of the elastomer in the resin composition is preferably 0 to 30 wt% and more preferably 0 to 10 wt% based on 100 wt% of the resin composition.

In one embodiment, the content of the elastomer in the resin composition may be 5 to 30 wt%.

[1.6. physical properties of polypropylene-based resin composition]

In the polypropylene-based resin composition of the present embodiment, the melt flow rate measured under conditions of 230°C and a load of 2.16 kgf is preferably 0.1 g/10 min or more, and more preferably 1 g/10 min or more; and is preferably 400 g/10 min or less, more preferably 300 g/10 min or less, and still more preferably 200 g/10 min or less. The MFR of the resin composition is less than or equal to the upper limit value of the above range, which can thereby effectively improve the flame-retardant performance of the resin composition. The MFR of the resin composition is more than or equal to the lower limit value of the above range, which can thereby achieve good weld strength of a molded object containing the resin composition.

[1.7. Applications of polypropylene-based resin composition]

From the polypropylene-based resin composition of the present embodiment, it is possible to produce a molded object (particularly, injection-molded object) having excellent flame retardancy and good appearance. Examples of the molded object include an injection-molded object, an extrusion-molded object, compression-molded object, profile-molded object, vacuum-molded object, sheet-molded object, roll-molded object, hot press-molded object, foam-molded object, injection press-molded object, blow-molded object, and gas injection-molded object. The dimensions of the molded object are not particularly limited, but for example, the external dimensions are 0.5 to 2 m in length, 0.5 to 2 m in width, and 1 to 10 mm in thickness. The shape of the molded object may be, for example, a plate shape or a hollow shape. The polypropylene-based resin composition of the present embodiment can be suitably used as a material for various members (e.g., interior and exterior parts and an engine room interior part of an automobile, a two-wheeled vehicle part, a part of an electrical product, various containers, and furniture).

Examples of the interior and exterior parts of an automobile include an instrument panel, door trim, pillar, side protector, console box, column cover, bumper, fender, and wheel cover. Examples of the engine room interior part of an automobile include a battery case and engine cover. Examples of the two-wheeled vehicle part include a cowling and muffler cover.

[2. Method for producing polypropylene-based resin composition]

The polypropylene-based resin composition of the present embodiment can be produced by any method.

For example, the polypropylene-based resin composition can be produced by kneading the polypropylene-based polymer (A), the flame retardant (B), the glass fibers (C), and optional components added as necessary in a twin-screw kneading extruder including a cylinder and two screws.

Preferably, a raw material (1) containing the polypropylene-based polymer (A) and the flame retardant (B) is fed into the cylinder of the twin-screw kneading extruder at the position at a distance L1 from the end on the upstream side of the two screws, and the glass fibers (C) is fed into the cylinder at the position of a distance L2 from the end on the upstream side of the two screws. Here, L1/L is preferably in a range of 0 or more and less than 0.3, and L2/L is preferably in a range of 0.3 to 0.9.

L2/L is more preferably 0.5 or more, and still more preferably 0.6 or more; and is more preferably 0.5 to 0.9, and still more preferably 0.6 to 0.9. Usually, decreasing L2/L can decrease the aspect ratio of the glass fibers contained in the resin composition, and increasing L2/L can increase the aspect ratio.

The raw material (1) may contain, as an optional component, a molecular weight regulator for adjusting the molecular weight of the polypropylene-based polymer. Examples of the molecular weight regulator include an organic peroxide. The molecular weight regulator may be contained in the raw material (1) in a form of a masterbatch diluted with any resin.

[3. molded object]

A molded object according to one embodiment of the present invention contains the polypropylene-based resin composition. The molded object according to the present embodiment is composed of the polypropylene-based resin composition, and can be formed by molding the polypropylene-based resin composition. Since the molded object according to the present embodiment contains the polypropylene-based resin composition, the molded object has excellent flame retardancy and good appearance.

Examples and preferable examples of the polypropylene-based resin composition that can be contained in the molded object are the same as the examples and preferable examples described in the above item [1. Polypropylene-based resin composition].

The molding method is arbitrary and examples thereof include an injection-molding method. Examples of the injection-molding method include, in addition to a general injection-molding method, an injection foam-molding method, supercritical injection foam-molding method, ultrahigh-speed injection-molding method, injection compression-molding method, gas-assisted injection-molding method, sandwich-molding method, sandwich foam-molding method, and insert/outsert-molding method.

The molded object is preferably an injection-molded object molded by the injection-molding method.

The dimensions of the molded object are not particularly limited, but for example, the external dimensions are 0.5 to 2 m in length, 0.5 to 2 m in width, and 1 to 10 mm in thickness. The shape of the molded object may be, for example, a plate shape or a hollow shape.

The molded object of the present embodiment can be suitably used in the same applications as the application examples described in the applications of the polypropylene-based resin composition.

EXAMPLES

Hereinafter, the present invention will be described with reference to Examples, but the present invention is not limited thereto. In the following description, "%" means % by weight, and "parts" means "parts by weight" unless otherwise noted.

[Evaluation method]

(Melt flow rate (MFR, unit: g/10 min))

The melt flow rate was measured in accordance with the method specified in JIS K7210-1:2014 and K7210-2:2014 under the conditions of a load of 2.16 kgf and a temperature of 230°C.

(Weight average fiber length and aspect ratio of glass fibers)

The resin composition (2 g) was dissolved in boiling p-xylene for 2 hours to obtain a xylene insoluble component containing glass fibers. Then, the glass fibers in the xylene insoluble component were observed using a microscope, and the length and diameter of 200 glass fibers were measured. The weight average fiber length and average fiber diameter were calculated, and the ratio of the weight average fiber length to the average fiber diameter was taken as the aspect ratio of the glass fibers contained in the resin composition.

The weight average fiber length was calculated according to the following formula.

$$\text{Weight average fiber length (Lw)} = (\Sigma qi \times Li^2) / (\Sigma qi \times Li)$$

wherein Li is the length (fiber length) of a glass fiber, and qi is the number of glass fibers having the fiber length Li.

(Appearance of injection-molded article)

The resin composition was injection-molded using an injection-molding machine ("IS100EN" manufactured by Toshiba Machine Co., Ltd.) to prepare a test plate of 160 mm (length) × 160 mm (width) × 2.0 mm (thickness). The molding conditions were a molding temperature of 220°C and a mold cooling temperature of 50°C. The appearance of the obtained test plate was visually observed and evaluated according to the following criteria.

Good (∘): Protrusion of glass fibers is not noticeable on the surface of the test plate.

Poor (×): Protrusion of glass fibers is conspicuous on the surface of the test plate.

(Flammability in accordance with the standard UL94-V)

The resin composition was fed to an injection-molding machine "SYCAP110" manufactured by Sumitomo Heavy Industries, Ltd. and injection-molded under the conditions of a molding temperature of 230°C and a mold cooling temperature of 50°C to prepare a test piece of 127 mm (length) × 13 mm (width) × 1.6 mm (thickness). Using the obtained test piece, the flame retardancy of the test piece was evaluated in accordance with the UL94-V standard. The flame retardancy is such that V-0 is superior to V-1 and V-1 is superior to V-2.

(Flammability in accordance with the standard UL94-5V)

The resin composition was fed to an injection-molding machine "IS100EN" manufactured by Toshiba Machine Co., Ltd., and injection-molded under the conditions of a molding temperature of 220°C and a mold cooling temperature of 50°C to prepare a test plate of 160 mm (length) × 160 mm (width) × 2.0 mm (thickness). Using the obtained test plate, a plaque test was performed based on the standard UL94-5V. The obtained test plate having a thickness of 2.0 mm was cut into a size of 127 mm (length) × 13 mm (width) × 2.0 mm (thickness) to obtain a test piece, and a bar test was performed based on the standard UL94-5V.

When the plaque test and bar test criteria were met, the evaluation was 5VA.

[Raw materials used in Examples and Comparative Examples]

Raw materials used in Examples and Comparative Examples are described below.

(Component (A): propylene homopolymers (A-1) to (A-3))

Propylene homopolymers (A-1) to (A-3) as polypropylene-based polymers were produced from propylene by a gas phase polymerization method using a polymerization catalyst obtained by the method described in Example 1 of JP-A-2004-182981. The production conditions were such that the polymers (A-1) to (A-3) had the following physical properties.

Propylene homopolymer (A-1)
MFR: (230°C, 2.16 kgf load): 14 g/10 min
Propylene homopolymer (A-2)
MFR: (230°C, 2.16 kgf load): 120 g/10 min
Propylene homopolymer (A-3)
MFR: (230°C, 2.16 kgf load): 240 g/10 min

(Component (B): phosphorus-containing flame retardant)

As the phosphorus-containing flame retardant, a flame retardant (product name: ADK STAB FP-2200S, manufactured by ADEKA Corporation) containing melamine phosphate and piperidine phosphate as main components was used.

(Component (C): glass fibers (C-1) to (C-3))

As the glass fibers (C-1) to (C-3), the following glass fibers were used.

Glass fibers (C-1): chopped strand 1
Diameter: 10 um
Fiber length: 4 mm
Glass fibers (C-2): milled fiber
Diameter: 11 um
Fiber length: 78 $\mu$m
Glass fibers(C-3): chopped strand 2
Diameter: 10 um
Fiber length: 9 mm

(Component (D): maleic anhydride-modified polypropylene-based polymer)

To 100 parts by weight of a propylene polymer powder (the limiting viscosity number [$\eta$] = 3.0 dL/g, the ethylene unit content of 0.2 wt%), 1.0 part by weight of maleic anhydride, 0.14 parts by weight of di-(tert-butylperoxy)diisopropylbenzene (product name: PERBUTYL P, manufactured by NOF Corporation), 0.05 parts by weight of dicetyl peroxydicarbonate (product name: PERKADOX 24FL, manufactured by Kayaku Akzo Co., Ltd.), 0.05 parts by weight of calcium stearate (product name: AR-2, manufactured by Sakai Chemical Industry Co., Ltd.), and 0.3 parts by weight of pentaerythritol tetrakis[3-(3,5-di-tert-butyl-4-hydroxyphenyl)propionate] (product name: Songnox 1010, manufactured by Songwon Industrial Co., Ltd.) as an antioxidant were added, and the mixture was sufficiently premixed. Then, the preliminary mixture was fed from the feed port of a twin-screw extruder and kneaded to obtain a maleic anhydride-modified polypropylene-based polymer. The obtained maleic anhydride-modified polypropylene-based polymer as an acid-modified polypropylene-based polymer had an MFR (230°C, 2.16 kgf load) of 170 g/10 min and a maleic anhydride unit content of 0.32 (wt%).

[Example 1]

(Production of polypropylene-based resin composition)

The components (A) (polypropylene-based polymer), (D) (acid-modified polypropylene-based polymer), and (B) (phosphorus-containing flame retardant) of the formulation shown in Table 1-1; and 0.05 parts by weight of calcium stearate (product name: calcium stearate S, manufactured by NOF Corporation) as a neutralizing agent, 0.1 parts by weight of 3,9-bis[2-(3-(3-tert-butyl-4-hydroxy-5-methylphenyl)propionyloxy)-1,1-dimethylethyl]-2,4,8,10-tetraoxaspiro[5.5]undecane (product name: Sumilizer GA80, manufactured by Sumitomo Chemical Co., Ltd.), 0.2 parts by weight of 3,9-bis(2,4-di-tert-butylphenoxy)-2,4,8,10-tetraoxaspiro[5.5]undecane (product name: Songnox 6260, manufactured by Songwon Industrial Co., Ltd.), and 0.2 parts by weight of dimyristyl-3,3-thiodipropionate (product name: Sumilizer TPM, manufactured by Sumitomo Chemical Co., Ltd.) as antioxidants, and 0.6 parts by weight of resin pellets containing 1,3-di-(2-tert-butylperoxyisopropyl)benzene (product name: CH-11, manufactured by Kayaku Nouryon Corporation, containing an 8% organic peroxide component) as an organic peroxide master batch were fed from the main hopper of a twin-screw kneading extruder, and melt-kneaded at a temperature of 200 to 230°C and a screw rotation speed of 400rpm. When the total length of the screw is L and the distance from the end on the upstream side of the screw to the main hopper is L1, L1/L was 0.05. The amounts of the neutralizing agent, antioxidant, and organic peroxide masterbatch used are values based on 100 parts by mass of the total weight of the components (A), (D), (B), and (C).

In addition, the component (C) (glass fibers) of the formulation shown in Table 1-1 was fed from the side feeder provided in the middle of the twin-screw kneading extruder to the melt-kneaded product, which was then further kneaded and extruded from the die, and the extruded product was made into a strand through a cold-water tank, and then the strand was cut with a strand cutter to obtain pellets. When the total length of the screw is L and the distance from the end on the upstream side of the screw to the side feeder is L2, L2/L was 0.70.

The pellets were dried at 100°C for 2 hours in a hot air dryer to obtain pellets of the polypropylene-based resin composition to be subjected to evaluation. The pellets of the polypropylene-based resin composition obtained were molded by the above-described method to obtain a test piece or a test plate, which was then evaluated. The evaluation results are shown in Table 2-1.

[Example 2]

The components (A) (polypropylene-based polymer), (D) (acid-modified polypropylene-based polymer), (B) (phosphorus-containing flame retardant), and (C) (glass fibers) of the formulation shown in Table 1-1 were used. In addition, 0.58 parts by weight of an organic peroxide masterbatch (product name: CH-11, manufactured by Kayaku Nouryon Corporation, containing an 8% organic peroxide component) was used based on 100 parts by weight of the total weight of the components (A), (D), (B), and (C).

Except for the above, the same procedure as in Example 1 was performed to obtain pellets of the polypropylene-based resin composition to be evaluated. The pellets of the polypropylene-based resin composition obtained were molded by the above-described method to obtain a test piece or a test plate, which was then evaluated. The evaluation results are shown in Table 2-1.

[Examples 3 to 8]

The components (A) (polypropylene-based polymer), (D) (acid-modified polypropylene-based polymer), (B) (phosphorus-containing flame retardant), and (C) (glass fibers) of the formulation shown in Tables 1-1 and 1-2 were used. No organic peroxide masterbatch (product name: CH-11, manufactured by Kayaku Nouryon Corporation, containing an 8% organic peroxide component) was used.

Except for the above, the same procedure as in Example 1 was performed to obtain pellets of the polypropylene-based resin composition to be evaluated. The pellets of the polypropylene-based resin composition obtained were molded by the above-described method to obtain a test piece or a test plate, which was then evaluated. The evaluation results are shown in Tables 2-1 and 2-2.

[Example 9]

The components (A) (polypropylene-based polymer), (D) (acid-modified polypropylene-based polymer), (B) (phosphorus-containing flame retardant), and (C) (glass fibers) of the formulation shown in Table 1-2 were used. In addition, 0.30 parts by weight of an organic peroxide masterbatch (product name: CH-11, manufactured by Kayaku Nouryon Corporation, containing an 8% organic peroxide component) was used based on 100 parts by weight of the total weight of the components (A), (D), (B), and (C).

Except for the above, the same procedure as in Example 1 was performed to obtain pellets of the polypropylene-based resin composition to be evaluated. The pellets of the polypropylene-based resin composition obtained were molded by the above-described method to obtain a test piece or a test plate, which was then evaluated. The evaluation results are shown in Table 2-2.

[Comparative Example 1]

(Production of polypropylene-based resin composition)

The components (A) (polypropylene-based polymer), (D) (acid-modified polypropylene-based polymer), (B) (phosphorus-containing flame retardant) and (C) (glass fibers) of the formulation shown in Table 1-3; and, based on 100 parts by weight of the total weight of the components (A), (D), (B), and (C), 0.05 parts by weight of calcium stearate (product name: calcium stearate S, manufactured by NOF Corporation) as a neutralizing agent, and 0.1 parts by weight of 3,9-bis[2-(3-(3-tert-butyl-4-hydroxy 5-methylphenyl)propionyloxy)-1,1-dimethylethyl]-2,4,8,10-tetraoxaspiro[5.5]undecane (product name: Sumilizer GA80, manufactured by Sumitomo Chemical Co., Ltd.), 0.2 parts by weight of 3,9-bis(2,4-di-tert-butylphenoxy)-2,4,8,10-tetraoxaspiro[5.5]undecane (product name: Songnox 6260, manufactured by Songwon Industrial Co., Ltd.) and 0.2 parts by weight of dimyristyl-3,3-thiodipropionate (product name: Sumilizer TPM, manufactured by Sumitomo Chemical Co., Ltd.) as antioxidants were fed from the main hopper of a twin-screw kneading extruder, and melt-kneaded at a temperature of 200 to 230°C and a screw rotation speed of 400rpm. When the total length of the screw is L and the distance from the end on the upstream side of the screw to the main hopper is L1, L1/L was 0.05.

The melt-kneaded product was extruded from the die, the extruded product was made into a strand through a cold-water tank, and then the strand was cut with a strand cutter to obtain pellets.

The pellets were dried at 100°C for 2 hours in a hot air dryer to obtain pellets of the polypropylene-based resin composition to be subjected to evaluation. The pellets of the polypropylene-based resin composition obtained were molded by the above-described method to obtain a test piece or a test plate, which was then evaluated. The evaluation results are shown in Table 2-3.

[Comparative Examples 2 to 3]

The components (A) (polypropylene-based polymer), (D) (acid-modified polypropylene-based polymer), (B) (phosphorus-containing flame retardant), and (C) (glass fibers) of the formulation shown in Table 1-3 were used. In addition, 0.30 parts by weight of an organic peroxide masterbatch (product name: CH-11, manufactured by Kayaku Nouryon Corporation, containing an 8% organic peroxide component) was used based on 100 parts by weight of the total weight of the components (A), (D), (B), and (C).

Except for the above, the same procedure as in Example 1 was performed to obtain pellets of the polypropylene-based resin composition to be evaluated. The pellets of the polypropylene-based resin composition obtained were molded by the above-described method to obtain a test piece or a test plate, which was then evaluated. The evaluation results are shown in Table 2-3.

[Formulation of each component and method for feeding glass fibers in Examples and Comparative Examples]

The formulation of each component used in Examples and Comparative Examples and the method for feeding glass fibers are shown in Tables 1-1 to 1-3.

In the Tables below, abbreviations represent the following meanings, respectively.

"PP": polypropylene-based polymer
"A-1 (MFR: 14)": propylene homopolymer (A-1)
"A-2 (MFR: 120)": propylene homopolymer (A-2)
"A-3 (MFR: 240)": propylene homopolymer (A-3)
"Acid-modified PP": acid-modified polypropylene-based polymer
"MPA": maleic anhydride-modified polypropylene-based polymer
"FP2200S": flame retardant (product name: ADK STAB FP-2200S, manufactured by ADEKA Corporation)
"GF": glass fibers
"C-1": glass fibers (C-1) (chopped strand 1)
"C-2": glass fibers (C-2) (milled fiber)
"C-3": glass fibers (C-3) (chopped strand 2)
"CH-11": organic peroxide masterbatch (product name: CH-11, manufactured by Kayaku Nouryon Corporation, containing an 8% organic peroxide component)
"Twin screw -side": indicates that glass fibers were fed from the side feeder of a twin-screw kneading extruder.
"Twin screw -main": indicates that glass fibers were fed from the main hopper of a twin-screw kneading extruder.

The content (wt%) of each of the components (A) to (D) is a numerical value expressed based on 100 wt% of the total content of the components (A) to (D).

[Table 1-1]

Table 1-1

|  |  | Example 1 | Example 2 | Example 3 | Example 4 | Example 5 |
|---|---|---|---|---|---|---|
| Component (A): PP |  |  |  |  |  |  |
| (A-1) (MFR:14) | wt% | 0 | 0 | 0 | 0 | 48.5 |
| (A-2) (MFR:120) | wt% | 0 | 48.5 | 0 | 48.5 | 0 |
| (A-3) (MFR:240) | wt% | 48.5 | 0 | 48.5 | 0 | 0 |
| Component (D): acid-modified PP |  |  |  |  |  |  |
| MPA | wt% | 1.5 | 1.5 | 1.5 | 1.5 | 1.5 |
| Component (B): flame retardant |  |  |  |  |  |  |
| FP2200S | wt% | 20 | 20 | 20 | 20 | 20 |
| Component (C): GF |  |  |  |  |  |  |
| (C-1) | wt% | 30 | 30 | 30 | 30 | 30 |
| (C-2) | wt% | 0 | 0 | 0 | 0 | 0 |
| (C-3) | wt% | 0 | 0 | 0 | 0 | 0 |
| Organic peroxide |  |  |  |  |  |  |
| CH-11 | Parts by weight | 0.60 | 0.58 | 0 | 0 | 0 |
| GF feed position |  | Twin screw -side | Twin screw -side | Twin screw -side | Twin screw -side | Twin screw -side |

[Table 1-2]

Table 1-2

|  |  | Example 6 | Example 7 | Example 8 | Example 9 |
|---|---|---|---|---|---|
| Component (A): PP |  |  |  |  |  |
| (A-1) (MFR:14) | wt% | 50.5 | 0 | 0 | 0 |
| (A-2) (MFR: 120) | wt% | 0 | 63.5 | 56.5 | 48.5 |
| (A-3) (MFR:240) | wt% | 0 | 0 | 0 | 0 |
| Component (D): acid-modified PP |  |  |  |  |  |
| MPA | wt% | 1.5 | 1.5 | 1.5 | 1.5 |
| Component (B): flame retardant |  |  |  |  |  |
| FP2200S | wt% | 18 | 26 | 23 | 40 |
| Component (C): GF |  |  |  |  |  |
| (C-1) | wt% | 30 | 10 | 20 | 10 |
| (C-2) | wt% | 0 | 0 | 0 | 0 |
| (C-3) | wt% | 0 | 0 | 0 | 0 |
| Organic peroxide |  |  |  |  |  |

(continued)

| | | Example 6 | Example 7 | Example 8 | Example 9 |
|---|---|---|---|---|---|
| CH-11 | Parts by weight | 0 | 0 | 0 | 0.30 |
| GF feed position | | Twin screw -side | Twin screw -side | Twin screw -side | Twin screw -side |

[Table 1-3]

Table 1-3

| | | Comparative example 1 | Comparative example 2 | Comparative example 3 |
|---|---|---|---|---|
| Component (A): PP | | | | |
| (A-1) (MFR:14) | wt% | 0 | 0 | 0 |
| (A-2) (MFR:120) | wt% | 0 | 48.5 | 48.5 |
| (A-3) (MFR:240) | wt% | 48.5 | 0 | 0 |
| Component (D): acid-modified PP | | | | |
| MPA | wt% | 1.5 | 1.5 | 1.5 |
| Component (B): flame retardant | | | | |
| FP2200S | wt% | 20 | 20 | 20 |
| Component (C): GF | | | | |
| (C-1) | wt% | 30 | 0 | 0 |
| (C-2) | wt% | 0 | 30 | 0 |
| (C-3) | wt% | 0 | 0 | 30 |
| Organic peroxide | | | | |
| CH-11 | Parts by weight | 0 | 0.30 | 0.60 |
| GF feed position | | Twin screw -main | Twin screw -side | Twin screw -side |

[Compositions of resin compositions and evaluation results]

The compositions and evaluation results of the resin compositions are shown in Tables below.
The column in which the evaluation is not described in the item of the combustion test (UL94 5V) in Tables denote that the evaluation of the combustion test (UL94 5V) has not been performed.
Abbreviations in Tables denote the following meanings.

"1.6 mmt ": 1.6 mm thickness

"2.0 mmt ": 2.0 mm thickness

[Table 2-1]

Table 2-1

| | | Example 1 | Example 2 | Example 3 | Example 4 | Example 5 |
|---|---|---|---|---|---|---|
| (A) PP | wt% | 48.5 | 48.5 | 48.5 | 48.5 | 48.5 |
| (D) Acid-modified PP | wt% | 1.5 | 1.5 | 1.5 | 1.5 | 1.5 |
| (B) Flame retardant | wt% | 20 | 20 | 20 | 20 | 20 |
| (C) GF | wt% | 30 | 30 | 30 | 30 | 30 |
| GF fiber length | um | 517 | 474 | 414 | 502 | 341 |
| GF aspect ratio | | 52 | 47 | 41 | 50 | 34 |
| MFR | g/10min | 116.5 | 73.6 | 34.2 | 17.3 | 4.5 |
| Combustion test (UL94 V) | 1.6 mmt | V-0 | V-0 | V-0 | V-0 | V-0 |
| Combustion test (UL94 5V) | 2.0 mmt | | | | | 5VA |
| Appearance | - | ○ | ○ | ○ | ○ | ○ |

[Table 2-2]

Table 2-2

| | | Example 6 | Example 7 | Example 8 | Example 9 |
|---|---|---|---|---|---|
| (A) PP | wt% | 50.5 | 63.5 | 56.5 | 48.5 |
| (D) Acid-modified PP | wt% | 1.5 | 1.5 | 1.5 | 1.5 |
| (B) Flame retardant | wt% | 18 | 26 | 23 | 40 |
| (C) GF | wt% | 30 | 10 | 20 | 10 |
| GF fiber length | um | 352 | 516 | 445 | 450 |
| GF aspect ratio | | 35 | 52 | 45 | 45 |
| MFR | g/10min | 4.5 | 27.1 | 22.5 | 31.1 |
| Combustion test (UL94 V) | 1.6 mmt | V-0 | V-0 | V-0 | V-0 |
| Combustion test (UL94 5V) | 2.0 mmt | | | | |
| Appearance | - | ○ | ○ | ○ | ○ |

[Table 2-3]

Table 2-3

| | | Comparative example 1 | Comparative example 2 | Comparative example 3 |
|---|---|---|---|---|
| (A) PP | wt% | 48.5 | 48.5 | 48.5 |
| (D) Acid-modified PP | wt% | 1.5 | 1.5 | 1.5 |
| (B) Flame retardant | wt% | 20 | 20 | 20 |
| (C) GF | wt% | 30 | 30 | 30 |
| GF fiber length | um | 182 | 120 | 621 |
| GF aspect ratio | | 18 | 11 | 62 |

(continued)

|  | | Comparative example 1 | Comparative example 2 | Comparative example 3 |
|---|---|---|---|---|
| MFR | g/10min | 56.1 | 71.7 | 46.8 |
| Combustion test (UL94 V) | 1.6 mmt | V-1 | V-2 | V-0 |
| Combustion test (UL94 5V) | 2.0 mmt | | | |
| Appearance | - | ○ | ○ | × |

The following matters are found from the above results.

The molded articles formed from the polypropylene-based resin compositions containing glass fibers having an aspect ratio of 20 to 60 according to Examples 1 to 9 are excellent in evaluation of flame retardancy in accordance with the UL94-V standard. On the other hand, the molded articles formed from the polypropylene-based resin compositions containing glass fibers having an aspect ratio of less than 20 according to Comparative Examples 1 to 2 are poor in evaluation of flammability in accordance with the UL94-V standard. The molded article formed from the polypropylene-based resin composition containing glass fibers having an aspect ratio of more than 60 according to Comparative Example 3 has a poor appearance.

DESCRIPTION OF REFERENCE SIGNS

100  Twin-screw kneading extruder
101  Cylinder
110  Screw
111  End of screw
112  End of screw
130  Main hopper
140  Side feeder

**Claims**

1. The polypropylene-based resin composition comprising a polypropylene-based polymer (A), a flame retardant (B), and glass fibers (C) having an aspect ratio of 20 to 60.

2. The polypropylene-based resin composition according to claim 1, wherein the glass fibers (C) have a length of 200 to 600 $\mu$m.

3. The polypropylene-based resin composition according to claim 1 or 2, further comprising an acid-modified polyolefin-based polymer (D).

4. The polypropylene-based resin composition according to any one of claims 1 to 3, having a whole amount of 100 wt% and

   having a content of the polypropylene-based polymer (A) of 30 to 70 wt%,
   a content of the flame retardant (B) of 5 to 50 wt%, and
   a content of the glass fibers (C) of 5 to 40 wt%.

5. A molded object comprising the polypropylene-based resin composition according to any one of claims 1 to 4.

6. The molded object according to claim 5, having external dimensions of 0.5 to 2 m in length, 0.5 to 2 m in width, and 1 to 10 mm in thickness.

FIG. 1

## INTERNATIONAL SEARCH REPORT

International application No.

PCT/JP2021/028749

### A. CLASSIFICATION OF SUBJECT MATTER
Int.Cl. C08K7/14(2006.01)i, C08L23/10(2006.01)i, C08L23/26(2006.01)i
FI: C08L23/10, C08K7/14, C08L23/26

According to International Patent Classification (IPC) or to both national classification and IPC

### B. FIELDS SEARCHED
Minimum documentation searched (classification system followed by classification symbols)
Int.Cl. C08K7/14, C08L23/10, C08L23/26

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2016/125597 A1 (ADEKA CORPORATION) 11 August 2016 (2016-08-11), claims, paragraphs [0012], [0024]-[0026], examples | 1-6 |
| Y | JP 61-69848 A (IDEMITSU PETROCHEMICAL CO., LTD.) 10 April 1986 (1986-04-10), claims, page 2, upper left column, line 19 to upper right column, line 3, lower left column, lines 3-16 | 1-6 |
| Y | JP 61-72040 A (IDEMITSU PETROCHEMICAL CO., LTD.) 14 April 1986 (1986-04-14), claims, page 2, upper right column, lines 2-6, page 3, lines 3-16 | 1-6 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 August 2021 | 07 September 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2021/028749

C (Continuation). DOCUMENTS CONSIDERED TO BE RELEVANT

| Category* | Citation of document, with indication, where appropriate, of the relevant passages | Relevant to claim No. |
|---|---|---|
| Y | JP 61-72039 A (IDEMITSU PETROCHEMICAL CO., LTD.) 14 April 1986 (1986-04-14), claims, page 2, upper left column, lines 13-18, lower left column, line 12 to lower right column, line 6 | 1-6 |
| Y | JP 2014-208802 A (JAPAN POLYPROPYLENE CORPORATION) 06 November 2014 (2014-11-06), claims, examples | 1-6 |

Form PCT/ISA/210 (second sheet) (January 2015)

**INTERNATIONAL SEARCH REPORT**
Information on patent family members

| International application No. |
| --- |
| PCT/JP2021/028749 |

| | | |
| --- | --- | --- |
| WO 2016/125597 A1 | 11 August 2016 | US 2018/0265683 A1<br>claims, paragraphs [0019],<br>[0034]-[0037], examples<br>EP 3255095 A1<br>CN 107108984 A<br>KR 10-2017-0115485 A<br>TW 201638184 A |
| JP 61-69848 A | 10 April 1986 | (Family: none) |
| JP 61-72040 A | 14 April 1986 | (Family: none) |
| JP 61-72039 A | 14 April 1986 | (Family: none) |
| JP 2014-208802 A | 06 November 2014 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016125597 A
- JP 61218606 A
- JP 5194685 A
- JP 7216017 A
- JP 9316147 A
- JP 10212319 A
- JP 2004182981 A
- JP 55075410 A
- JP 2565753 B

**Non-patent literature cited in the description**

- Polymer solution, Polymer experiment 11 (Kobunshi yoeki, Kobunshi jikken-gaku 11). Kyoritsu Shuppan Co., Ltd, 1982, 491